# EUROPÄISCHE PATENTSCHRIFT

(11) **EP 3 057 727 B1**
(45) Veröffentlichungstag und Bekanntmachung des Hinweises auf die Patenterteilung: **13.09.2017**
(21) Anmeldenummer: 14784470.8
(22) Anmeldetag: 16.10.2014
(51) Int. Cl.: B22D 23/02, F16D 65/18

(54) **GIESSVERFAHREN UND GUSSFORM ZUR HERSTELLUNG EINES BREMSSATTELS**
CASTING PROCESS AND CASTING MOULD FOR PRODUCING A BRAKE CALIPER
PROCÉDÉ DE COULÉE ET MOULE PERMETTANT DE PRODUIRE UN ÉTRIER DE FREIN

(30) Priorität: 18.10.2013 DE 102013017683
(43) Veröffentlichungstag der Anmeldung: 24.08.2016
(73) Patentinhaber: KNORR-BREMSE Systeme für Nutzfahrzeuge GmbH, 80809 München (DE)
(72) Erfinder: WERTH, Alexander, 80999 München (DE); FISCHL, Tobias, 80336 München (DE)
(86) Internationale Anmeldenummer: PCT/EP2014/072169
(87) Internationale Veröffentlichungsnummer: WO 2015/055745

(56) Entgegenhaltungen:
- EP-A1- 2 644 927
- WO-A1-2015/040769
- DE-A1- 2 533 058
- DE-A1- 10 129 975
- DE-A1- 19 652 123
- US-A1- 2012 085 600

## Beschreibung

Die Erfindung betrifft ein Gießverfahren zur Herstellung eines Bremssattels nach dem Oberbegriff des Anspruchs 1 sowie eine Gussform gemäß dem Oberbegriff des Anspruchs 4.

Zur Betätigung einer Zuspanneinrichtung, mit der ein Bremsvorgang eingeleitet wird, ist an dem aus Gusseisen bestehenden Bremssattel ein vorzugsweise pneumatisch betätigter Bremszylinder angeschlossen, der über einen durch eine Öffnung des Bremssattels geführten Stößel an einem Bremshebel der Zuspanneinrichtung angreift, wobei dieser Bremshebel exzentrisch im Bremssattel gelagert ist und sich dabei an einer Rückwand des Aufnahmeraumes abstützt, die damit ein Widerlager bildet.

Bei den verschiedenen Fahrzeugtypen unterschiedlicher Fahrzeughersteller, in denen Scheibenbremsen zum Einsatz kommen, variiert der zur Montage zur Verfügung stehende Bauraum, so dass insbesondere die Lage des an den Bremssattel angeflanschten Bremszylinders jeweils anzupassen ist, wozu die außenseitige Flanschfläche des Bremssattels entsprechend zu modifizieren ist.

Zur Herstellung des Bremssattels durch Gießen kommen Gussformen zum Einsatz, die zweiteilig sind und aus einem Unter- und einem Oberkasten bestehen, in denen ein Kern zur Ausbildung des Aufnahmeraumes positioniert ist.

Um den unterschiedlichen Forderungen hinsichtlich der Anordnung der Bremszylinder und damit der Konfiguration der jeweiligen Flanschfläche des Bremssattels zu entsprechen, sind eine Vielzahl verschiedener Gussformen bereitzuhalten, die für den jeweiligen speziell zu formenden Bremssattel eingesetzt werden.

Naturgemäß ist dies mit erheblichen Kosten verbunden, die sich nicht nur aus der Bereithaltung der verschiedenen Gussformen ergeben, sondern auch daraus, dass bei einem Fahrzeug-Modellwechsel sich der Bauraum zur Unterbringung der Scheibenbremse ändert, mit einer Neuanpassung der Raumlage des Bremszylinders und in der Folge der Flanschfläche.

Bei der Vielzahl der zum Einsatz kommenden unterschiedlichen Bremssättel ergibt sich daraus eine einer stets angestrebten Kostenoptimierung diametral gegenüberstehende Kostensituation.

Aus der EP 2 644 927 A1 ist ein Bremssattel bekannt, bei dem ein Flansch mit einer Flanschfläche zur Anlage eines Bremszylinders an das durch Gießen hergestellte Gehäuse eines Bremssattels angeschraubt ist.

Der Erfindung liegt die Aufgabe zugrunde, ein Gießverfahren und eine Gussform der gattungsgemäßen Art so weiterzuentwickeln, dass die Herstellung unterschiedlicher Bremssättel einfacher und kostengünstiger wird.

Diese Aufgabe wird durch ein Gießverfahren mit den Merkmalen des Anspruchs 1 sowie eine Gussform nach Anspruch 4 gelöst.

Das neue Verfahren schafft nun die Möglichkeit, lediglich eine Gussform bereitzuhalten, mit der hinsichtlich ihrer Flanschflächen unterschiedliche Bremssättel herstellbar sind. Dabei unterscheiden sich die Flanschflächen vor allem in Bezug auf ihre Anflanschwinkel, unter denen die Bremszylinder befestigt werden.

Eine Bevorratung bzw. ein Einsatz jeweils daran angepasster Unter- und Oberkästen der Gussformen ist nicht mehr erforderlich, was naturgemäß mit einer erheblichen Kostenreduzierung einhergeht.

D.h., eine Gussform, bestehend aus einem Unter- und einem Oberkasten kann nun für den Guss von Bremssätteln eingesetzt werden, deren Flanschflächen unterschiedlichst gestaltet sind.

Während der den Aufnahmeraum bestimmende Kern bei allen herzustellenden Bremssätteln einer bestimmten Modellreihe identisch ist, wobei der Kern aus zwei oder mehreren Teilen besteht und mit lediglich einem Kernwerkzeug herstellbar ist, sind die Formteile, mit denen die Flanschflächen abgebildet werden, jeweils mit unterschiedlichen Werkzeugen herzustellen.

Dabei kann das Formteil im Sinne eines Kernes ausgebildet sein, d.h., als verlorenes Teil. Denkbar ist aber auch, das Formteil im Sinne des Formkastens auszubilden und lediglich als Austauschelement dort einzubringen. D.h., ein solches Formteil ist bei Bedarf jederzeit wiederverwendbar.

Das Formteil kann auch so ausgebildet sein, dass eine seitliche Hebelführung für den Bremshebel mit herstellbar ist. Dies hat gegenüber der bisherigen Fertigung, bei der eine aufwändige dritte Ausformrichtung vorgesehen sein muss, wesentliche Vorteile. Dies betrifft im Übrigen auch eine spanende Bearbeitung der Hebelführung, die hinsichtlich der einzuhaltenden Toleranzen äußerst problematisch ist.

Alternativ oder ergänzend kann bei einer weiteren Variante der Erfindung das Formteil so ausgebildet sein, dass der der Flanschfläche gegenüberliegende Bereich des Flansches, auf dem Gewindemuttern aufliegen, mit denen Gewindebolzen des Bremszylinders am Bremssattel befestigt sind, entsprechend angeformt werden.

Zwar ist die Herstellung des Formteiles, vorzugsweise wenn dies im Sinne des Kernes hergestellt ist, etwas aufwändiger, jedoch sind die erzielten Vorteile bezüglich der Qualität der Auflagefläche für die Gewindemuttern durchaus bemerkenswert und rechtfertigen in jedem Fall die genannte etwas aufwändigere Herstellung des Formteiles.

Falls das Formteil im Sinne eines Kerns hergestellt wird, was über ein Kernwerkzeug erfolgt, wird dies so ausgelegt, dass alle Formteilvarianten mit diesem einen Kernwerkzeug herstellbar sind. Dazu wäre in einem Kernkasten des Kernwerkzeuges ein austauschbares Losteil vorzusehen, während die restlichen Bereiche des Kernwerkzeuges für alle Varianten gleich bleiben.

Da die verschiedenen Varianten des Bremssattels, insbesondere aus logistischen Gründen durch eingebrachte Kennzeichnungen identifizierbar sein müssen, kann diese Kennzeichnung, beispielsweise in Form von Teilenummern, Chargennummern oder einer Gießuhr durch das Formteil eingebracht werden, das dadurch entsprechend modifiziert ist.

Denkbar ist auch eine Kodierung des Bremssattels durch Erhöhungen oder Vertiefungen im Formteil und damit in der Geometrie des Bremssattels zu erzeugen bzw. abzubilden.

Weitere vorteilhafte Ausbildungen der Erfindung sind in den Unteransprüchen gekennzeichnet.

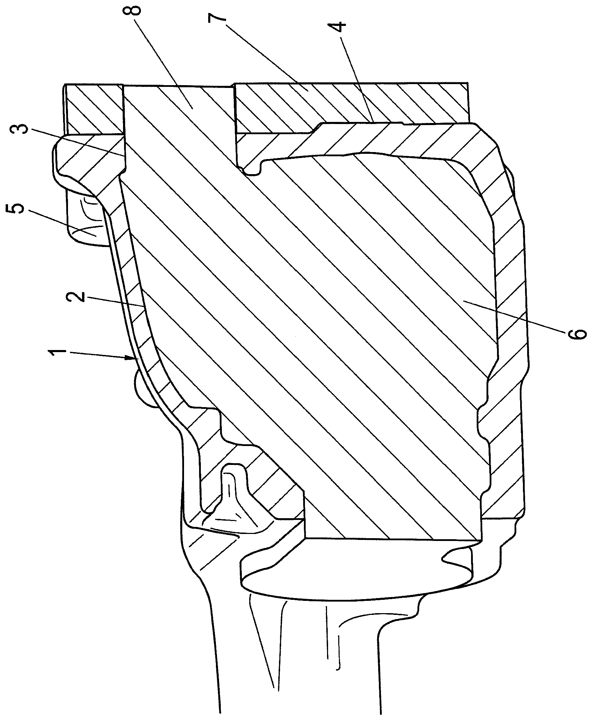

Das erfindungsgemäße Verfahren wird nachfolgend anhand der beigefügten Zeichnung nochmals beschrieben.

Die einzige Figur zeigt im Querschnitt einen Teilausschnitt eines gegossenen Bremssattels mit eingelagertem Kern in einer schematischen Darstellung.

Ein in der Figur erkennbarer Bremssattel 1, von dem ein Teil dargestellt ist und der durch ein Gießverfahren hergestellt ist, wobei der Bremssattel 1 aus Gusseisen besteht, weist eine Aufnahmekammer 2 auf, in der nach einer Komplettierung des Bremssattels 1, der Bestandteil einer an einem Fahrzeug, vorzugsweise einem Nutzfahrzeug befestigten Scheibenbremse ist, Funktionsteile positioniert sind.

Solche Funktionsteile sind beispielsweise eine Zuspanneinrichtung mit einem Bremshebel, über den bei Betätigung Bremsbeläge gegen eine fahrzeugseitige Bremsscheibe pressbar sind, wobei der Bremssattel 1 die Bremsscheibe übergreift.

Die auf den Bremshebel aufzubringende Bremskraft wird von einem nicht dargestellten Bremszylinder bereitgestellt, der vorzugsweise pneumatisch betätigbar ist und der einen Stößel aufweist, der durch eine Öffnung 3 des Bremssattels 1 hin zum Bremshebel geführt ist, mit dem er in Eingriff steht.

Der Bremszylinder wird an einer außenseitig des Bremssattels 1 vorgesehenen Flanschfläche 4 angeschlossen, wobei der Bremszylinder einen an der Flanschfläche 4 anliegenden Flansch aufweist, mit Gewindebolzen, die durch Durchgangsöffnungen des Bremssattels 1 geführt sind und diesen an Anlageflächen 5 für Gewindemuttern durchtreten. Mittels dieser Gewindemuttern, die sich an den Anlageflächen 5 abstützen, wird der Bremszylinder mit dem Bremssattel 1 verspannt.

Zur Ausformung des Aufnahmeraumes 2 ist in einer gleichfalls nicht gezeigten Gussform, die aus einem Unter- und Oberkasten besteht, ein Kern 6 positioniert, der mit einem Ansatz 8 die vom Stößel durchtretene Öffnung bestimmt, wobei dieser Ansatz 8 sich an einer Wandung der Gussform abstützt.

Erfindungsgemäß ist zur Ausbildung der Flanschfläche 4 ein separates Formteil 7 in der Gussform angeordnet und nach Gießen des Bremssattels 1 entfernbar.

Dieses Formteil 7 kann so ausgebildet sein, dass damit auch die Anlageflächen 5 für die Gewindemuttern hergestellt werden, wodurch sich eine wesentliche Bearbeitungsvereinfachung des gegossenen Bremssattels 1 ergibt.

Das Formteil 7 kann im Übrigen im Sinne eines Kernes ausgebildet sein, d.h., als verlorenes Teil. Denkbar ist aber auch, das Formteil 7, entsprechend der Gussform im Übrigen auszubilden, beispielsweise aus Metall und auswechselbar in der Gussform zu installieren.

## Patentansprüche

1. Gießverfahren zur Herstellung eines Bremssattels (1), der einen Aufnahmeraum (2) für Funktionsteile, wie eine Zuspanneinrichtung mit einem Bremshebel aufweist, sowie eine außenseitige Flanschfläche (4), an der ein Bremszylinder befestigbar ist, wobei in einer Gussform vor dem Gießen ein den Aufnahmeraum (2) definierender Kern (6) positioniert wird, **dadurch gekennzeichnet, dass** zur Ausbildung der Flanschfläche (4) zusätzlich ein separates Formteil (7) in der Gussform angeordnet wird.

2. Gießverfahren nach Anspruch 1, **dadurch gekennzeichnet, dass** das Formteil (7) so ausgebildet ist, dass auf der der Flanschfläche (4) gegenüberliegenden Seite am Bremssattel (1) Anlageflächen (5) für Gewindemuttern beim Gießen ausgebildet werden.

3. Gießverfahren nach einem der vorhergehenden Ansprüche, **dadurch gekennzeichnet, dass** das Formteil (7) vor dem Einsetzen in die Gussform in einem Kernwerkzeug hergestellt wird.

4. Gussform zur Herstellung eines Bremssattels (1), mit einem Ober- und einem Unterkasten sowie einem darin angeordneten Kern (6) zur Ausbildung eines Aufnahmeraums (2) des Bremssattels (1), **dadurch gekennzeichnet, dass** ein separates, entfernbares Formteil (7) zur Anformung einer außenseitigen Flanschfläche (4) des Bremssattels (1) im Innern der Gussform positioniert ist.

5. Gussform nach Anspruch 4, **dadurch gekennzeichnet, dass** das Formteil (7) als verlorener Kern ausgebildet ist.

6. Gussform nach Anspruch 4 oder 5, **dadurch gekennzeichnet, dass** das Formteil (7) wiederverwendbar ist.

7. Gussform nach einem der Ansprüche 4 bis 6, **dadurch gekennzeichnet, dass** hinsichtlich ihres Flanschwinkels unterschiedliche Formteile (7) in der jeweiligen Gussform positionierbar sind.

8. Gussform nach einem der Ansprüche 4 bis 7, **dadurch gekennzeichnet, dass** das Formteil (7) bremssattelspezifische Kennzeichnungen, wie eine Teile- oder Chargennummer oder eine Gießuhr zur Abbildung im Bremssattel aufweist.

9. Gussform nach einem der Ansprüche 4 bis 8, **dadurch gekennzeichnet, dass** das Formteil Erhöhungen und/oder Vertiefungen als Kodierung zur Abbildung im Bremssattel aufweist.

## Claims

1. Casting method for producing a brake calliper (1) having an accommodation space (2) for functional parts, such as an application device with a brake lever, as well as an external flange surface (4), to which a brake cylinder can be secured, wherein a core (6) defining the accommodation space (2) is positioned in a casting mould before casting, **characterised in that** a separate mould part (7) is additionally placed in the casting mould to form the flange surface (4).

2. Casting method according to claim 1, **characterised in that** the mould part (7) is designed such that contact surfaces (5) for threaded nuts are formed on the brake calliper (1) during the casting process on the side opposite the flange surface (4).

3. Casting method according to any of the preceding claims, **characterised in that** the mould part (7) is produced in a core tool before installation into the casting mould.

4. Casting mould for producing a brake calliper (1), comprising a top flask and a bottom flask and a core (6) placed therein to form an accommodation space (2) of the brake calliper (1), **characterised in that** a separate removable mould part (7) is positioned in the interior of the casting mould for integrally forming an external flange surface (4) of the brake calliper (1).

5. Casting mould according to claim 4, **characterised in that** the mould part (7) is designed as a lost core.

6. Casting mould according to claim 4 or 5, **characterised in that** the mould part (7) is reusable.

7. Casting mould according to any of claims 4 to 7, **characterised in that** mould parts (7) which are different in their flange angle can be positioned in the respective casting mould.

8. Casting mould according to claim 4 or 7, **characterised in that** the mould part (7) has brake calliper-specific markings, such as a part or lot number or a casting clock for depiction in the brake calliper.

9. Casting mould according to claim 4 or 8, **characterised in that** the mould part has raised areas and/or indentations as coding for depiction in the brake calliper.

## Revendications

1. Procédé de coulée pour fabriquer un étrier (1) de frein, qui a un espace (2) de réception de partie fonctionnelle, comme un dispositif de serrage ayant un levier de frein, ainsi qu'une surface (4) de bride du côté extérieur, à laquelle peut être fixé un cylindre de frein, dans lequel on place, dans un moule de coulée, avant la coulée, un noyau (6) définissant l'espace (2) de réception, **caractérisé en ce que**, pour constituer la surface (4) de bride, on met, en outre, une partie (7) de moule distincte dans le moule de coulée.

2. Procédé de coulée suivant la revendication 1, **caractérisé en ce que** la partie (7) de moule est constitué de manière à constituer, à la coulée, du côté opposé à la surface (4) de bride, sur l'étrier (1) de frein, des surfaces (5) d'application d'écrous filetés.

3. Procédé de coulée suivant l'une des revendications précédentes, **caractérisé en ce que** l'on fabrique la partie (7) de moule dans un outil de noyau, avant l'insertion dans le moule de coulée.

4. Moule de coulée pour fabriquer un étrier (1) de frein, comprenant un caisson supérieur et un caisson inférieur, ainsi qu'un noyau (6), qui y est mis pour constituer un espace (2) de réception de l'étrier (1) de frein, **caractérisé en ce qu'**une partie (7) de moule distincte et pouvant être retirée est mise en position à l'intérieur du moule de coulée pour former une surface (4) de bride du côté extérieur de l'étrier (1) de frein.

5. Moule de coulée suivant la revendication 4, **caractérisé en ce que** la partie (7) de moule est constituée en noyau perdu.

6. Moule de coulée suivant la revendication 4 ou 5, **caractérisé en ce que** la partie (7) de moule peut être réutilisée.

7. Moule de coulée suivant l'une des revendications 4 à 6, **caractérisé en ce que** des parties (7) de moule différents par leur angle de bride peuvent être mises en position dans le moule de coulée.

8. Moule de coulée suivant l'une des revendications 4 à 7, **caractérisé en ce que** la partie (7) du moule a des caractérisations spécifiques à l'étrier de frein, comme un numéro de pièce ou de charge ou une heure de coulée à reproduire dans l'étrier de frein.

9. Moule de coulée suivant l'une des revendications 4 à 8, **caractérisé en ce que** la partie du moule a des bosses et/ou des creux comme codages à reproduire dans l'étrier de frein.
